# EUROPEAN PATENT APPLICATION

(11) **EP 3 648 242 A1**
(43) Date of publication of application: **06.05.2020**
(21) Application number: 18823332.4
(22) Date of filing: 27.06.2018
(51) Int. Cl.: H01M 10/613

(54) **CYLINDRICAL LITHIUM ION BATTERY**

(30) Priority: 28.06.2017 CN 201710511981
(71) Applicant: Hunan Melsen Car Power Co., Ltd, Changsha, Hunan 410205 (CN)
(72) Inventor: QIU, Boqian, Changsha Hunan 410205 (CN)
(74) Representative: Zaboliene, Reda
(86) International application number: PCT/CN2018/093103
(87) International publication number: WO 2019/001466

(57) **Abstract**

A cylindrical lithium-ion battery includes heat conducting and collecting bodies, which overlap and are stacked together to form at least one heat converging path, which being configured to transmit heat energy into or out of the battery cell. A thin-film heater is disposed on or connected to the heat converging path, the heat converging path and the thin-film heater cooperatively form a heat converging path heating assembly. Too high or too low temperature of the battery can be avoided.

## Description

### FIELD

The subject matter herein generally relates to lithium ion batteries, and more particularly, to a cylindrical lithium-ion battery.

### BACKGROUND

Traffic on the roads brings pressure on the energy crisis and environmental pollution, thus it is urgent to develop and research vehicles powered by efficient, clean and safe energy to achieve energy conservation and emission reduction. Lithium ion batteries have become the best candidates for power systems of the new energy vehicles because of high specific energy, no pollution, and no memory effect of the lithium ion batteries. However, the lithium ion batteries are very sensitive to temperature, and efficient discharge and good performance of the battery pack can be only obtained within a suitable temperature range. Operating at an elevated temperature may cause the lithium ion battery to age faster and increase its thermal resistances faster. Furthermore, the cycling time becomes less, the service life becomes shorter, and even thermal runaway problems occur at an elevated operating temperature. However, operating at too low a temperature may lower the conductivity of the electrolyte and the ability to conduct active ions, resulting an increase of the impedance, and a decrease in the capacity of the lithium ion batteries.

Conventionally, the cell is positioned to improve the fluid flow path and increase the heat dissipation. The battery casing may also be improved by replacing the aluminum alloy shell material with the composite of thermoelectric material and aluminum, and by adding a plurality of heat dissipating ribs to the side of the battery casing. The electrode plate may also be extended into the electrolyte to transmit heat energy to the battery casing through the electrolyte and then to the outside environment. Although some heat is dissipated, the heat dissipation efficiency is generally low because the heat cannot be directly discharged from the electrode plates, the main heat generating component, to the outside environment. Therefore, a new design of a cylindrical lithium-ion battery is desired.

### SUMMARY

To overcome the above shortcomings, the present disclosure provides a cylindrical lithium-ion battery, which can prevent the temperature of the battery from being too high or too low.

The present disclosure provides a cylindrical lithium-ion battery, which includes cylindrical outer casing, a positive cover plate, a negative cover plate, a positive terminal post, a negative terminal post, and a battery cell. The positive cover plate and the negative cover plate are disposed at opposite ends of the outer casing. The positive terminal post and the negative terminal post are respectively disposed on the positive cover plate and the negative cover plate. The battery cell includes a positive electrode plate, a negative electrode plate, and a separator spaced between the positive electrode plate and the negative electrode plate. The positive electrode plate, the separator, and the negative electrode plate are sequentially laminated together and then wound together to form the battery cell. The positive electrode plate includes a positive electrode tab. The negative electrode plate includes a negative electrode tab. The top cover includes a positive terminal post electrically connected to the positive terminal tab and a negative terminal post electrically connected to the negative electrode tab. The negative electrode plate includes a negative current collector and negative active material layers coated on the negative current collector. The positive electrode plate includes a positive current collector and positive active material layers coated on the positive current collector. Heat conducting and collecting bodies are formed on the positive electrode plate and/or the negative electrode plate. Each heat conducting and collecting body is a portion of the positive current collector not coated by the positive active material layer or a portion of the negative current collector not coated by the negative active material layer. The at least two heat conducting and collecting bodies overlap and are stacked together to form at least one heat converging path, which is configured to transmit heat energy into or out of the battery cell. A thin-film heater is disposed on or connected to the heat converging path. The heat converging path and the thin-film heater cooperatively form a heat converging path heating assembly. By stacking the heat conducting and collecting bodies to form the heat converging path and heating the heat converging path through the thin-film heater, the internal temperature of the battery is increased, thereby avoiding low working efficiency and low service life of the battery caused by a low internal temperature. The heat conducting and collecting body can be integrally formed with the positive electrode plate, which simplifies the manufacturing process and increase the manufacturing efficiency. The heat conducting and collecting body can be integrally formed with the positive electrode plate, which simplifies the manufacturing process and increase the manufacturing efficiency.

In an embodiment, the at least two heat conducting and collecting bodies spacedly overlap and are stacked together to form at least one heat converging path, which is configured to transmit heat energy into or out of the battery cell.

In an embodiment, the at least two heat conducting and collecting bodies are connected to form the heat converging path by welding. The heat conducting and collecting bodies can be connected together without any extra component. Heat can be conducted into or out of the heat converging path, thereby maintaining the temperature of the battery within a suitable range.

In the present disclosure, the welding can be ultrasonic welding, laser welding, or friction welding.

In an embodiment, the heat conducting and collecting bodies can also be connected together to form the heat converging path by bolting or riveting. As such, the heat conducting and collecting bodies can be connected together, and heat can be conducted into or out of the heat converging path, thereby maintaining the temperature of the battery within a suitable range.

The heat conducting and collecting bodies are bent towards each other before connected together to form the heat converging path. Therefore, the heat absorbed by the heat conducting and collecting bodies is converged, which facilitates cooling or heating of the battery.

Furthermore, the heat conducting and collecting bodies are bent to be perpendicular to the positive electrode plate or the negative electrode plate. The heat conducting and collecting bodies can also be bent to be inclined with the positive electrode plate or the negative electrode plate by an angle between 0 degree to 89 degrees. Therefore, the heat absorbed by the heat conducting and collecting bodies is converged, which facilitates cooling or heating of the battery.

In an embodiment, the entirety of the heat conducting and collecting bodies can be bent toward a single direction to form the heat converging path, which facilitates the connection of the heat conducting and collecting bodies and facilitates cooling or heating of the battery.

In an embodiment, the heat conducting and collecting bodies can also be bent toward opposite directions to form the heat converging path, which facilitates cooling or heating of the battery.

In an embodiment, a portion of the heat conducting and collecting bodies are bent, and the portion is connected to the remaining portion of the heat conducting and collecting bodies, the remaining portion of the heat conducting and collecting bodies is straight. This facilitates cooling or heating of the battery.

In an embodiment, the portion of the heat conducting and collecting bodies is bent towards a single direction, which can simplify the manufacturing process and facilitate cooling or heating of the battery.

In an embodiment, the portion of the heat conducting and collecting bodies can also bent towards opposite directions, which facilitates cooling or heating of the battery.

In an embodiment, at least a portion of the heat conducting and collecting bodies defines a plurality of holes, which can pass through the heat conducting and collecting body and have a 3D internal structure. At least a portion of the heat conducting and collecting bodies can also define a concave and convex surface. This can increase the surface area of the heat conducting and collecting bodies and facilitates cooling or heating of the battery.

In an embodiment, at least one of the heat conducting and collecting bodies, which define a plurality of holes, can also be disposed among the other heat conducting and collecting bodies. The holes can pass through the heat conducting and collecting body and have a mesh structure or a 3D internal structure. The heat conducting and collecting body can also define a concave and convex surface. This can increase the cooling or heating abilities.

In an embodiment of the present disclosure, a heat dissipation member is connected to the heat converging path, which can quickly conduct the heat into or out of the heat converging path.

Furthermore, the heat dissipation member can be a heat sink, which can quickly conduct the heat into or out of the heat converging path.

Furthermore, the heat dissipation member can be a metal sheet, which can quickly conduct the heat into or out of the heat converging path.

Furthermore, the metal sheet and the heat conducting and collecting body can be made of a same material, which facilitates the connection between the metal sheet and the heat conducting and collecting body.

In an embodiment, a plurality of fins are disposed among or on the heat conducting and collecting bodies, which can quickly conduct the heat into or out of the heat converging path and decrease the temperature of the battery.

In an embodiment, a heat sink is disposed on the heat conducting and collecting bodies, which can maintain the temperature of the battery within a suitable range.

In an embodiment, a heat exchanging device is connected to the heat converging path, which can maintain the temperature of the heat converging path within a suitable range, thereby avoiding damages to the battery.

Furthermore, the heat exchanging device is connected to the heat converging path by welding. The heat converging path and the second heat exchanging device are connected together without any extra component, which also facilitates the connection.

Furthermore, the heat converging path and the heat exchanging device can also be connected together by bolting, gluing, or riveting, which allows the connection to be stable.

In an embodiment, the heat converging path can also be directly connected to the outer casing. The outer casing then serves as a heat sink to allow the heat energy on the heat converging path to be delivered to the outer casing, which facilitates the cooling.

In an embodiment, the heat conducting and collecting body can have an insulating layer, an insulating and heat conductive layer, or an insulating film on a surface thereof. As such, a short circuit at the heat conducting and collecting bodies can be avoided. Potential safety hazards can further be avoided.

Furthermore, an insulating layer or an insulating film is disposed on a surface of the fluid-containing pipe. As such, a short circuit at the fluid-containing pipe can be avoided. Potential safety hazards can further be avoided.

In an embodiment, the at least one heat converging path is disposed at an end having a positive electrode tab, an end opposite to the positive electrode tab, or a side.

In an embodiment, one, two, or three of the heat converging paths are disposed at the end having the positive electrode tab.

In an embodiment, the heat conducting and collecting body is protrude from the positive electrode plate and the negative electrode plate, which facilitates conduction and dissipation of the heat energy.

Furthermore, portions of the heat conducting and collecting body protruding from the positive electrode plate and the negative electrode plate is further inserted into the electrolyte received in the metallic casing. As such, the heat energy from the heat conducting and collecting body can be conducted into the electrolyte and further to the external surface of the battery. Therefore, the heat energy is prevented from being accumulated in the battery due to poor heat conduction of the separator. Furthermore, the heat energy in the electrolyte can further quickly move to the electrode plates, which prevents the temperature of the battery from being too low.

Furthermore, a heat exchanging device is disposed in the electrolyte for heating or cooling the electrolyte. The electrolyte can in turn heat or cool the heat conducting and collecting bodies, thereby maintaining the temperature of the battery within a suitable range.

The heat conducting and collecting body can also be recessed with respect to the positive and the negative electrode plates, which saves the internal space and increases the capacity of the battery in casing of a certain size.

In an embodiment, a thickness of the entirety of the heat conducting and collecting body is same of that of the interconnecting portion between the heat conducting and collecting body and the positive and the negative electrode plates. As such, the heat conducting property of the heat conducting and collecting body is improved, and the manufacturing process is simplified.

In an embodiment, the exposing current collector is parallel to the positive active material layer.

Furthermore, an end of the battery is totally the exposing current collector.

In an embodiment, the exposing current collector covers a central portion of the positive active material layer.

A temperature sensor is disposed on the heat converging path, which can precisely sense the temperature of the heat converging path.

A temperature sensor is disposed on the heat exchanging device, which can precisely sense the temperature of the heat exchanging device.

The temperature sensor can be a thin-film temperature sensor.

The positive active material of the positive active material layer is lithium iron phosphate, lithium cobalt oxide, lithium manganate, or a ternary material.

The negative active material of the negative active material layers is carbon, tin-based negative material, transition metal nitride containing lithium or alloy.

### BRIEF DESCRIPTION OF THE DRAWINGS

FIG. 1 is a schematic view of a first embodiment according to the present disclosure.
FIG. 2 is a schematic view of a second embodiment according to the present disclosure.
FIG. 3 is a schematic view of a third embodiment according to the present disclosure.
FIG. 4 is a schematic view of a fourth embodiment according to the present disclosure.
FIG. 5 is a schematic view of a fifth embodiment according to the present disclosure.
FIG. 6 is a schematic view of a sixth embodiment according to the present disclosure.

### DETAILED DESCRIPTION

Implementations of the disclosure will now be described, by way of embodiments only, with reference to the drawings.

The present disclosure provides a cylindrical lithium-ion battery, which includes cylindrical outer casing, a positive cover plate, a negative cover plate, a positive terminal post, a negative terminal post, and a battery cell. The positive cover plate and the negative cover plate are disposed at opposite ends of the outer casing. The positive terminal post and the negative terminal post are respectively disposed on the positive cover plate and the negative cover plate. The battery cell includes a positive electrode plate, a negative electrode plate, and a separator spaced between the positive electrode plate and the negative electrode plate. The positive electrode plate, the separator, and the negative electrode plate are sequentially laminated together and then wound together to form the battery cell. The positive electrode plate includes a positive electrode tab. The negative electrode plate includes a negative electrode tab. The top cover includes a positive terminal post electrically connected to the positive terminal tab and a negative terminal post electrically connected to the negative electrode tab. The negative electrode plate includes a negative current collector and negative active material layers coated on the negative current collector. The positive electrode plate includes a positive current collector and positive active material layers coated on the positive current collector. Heat conducting and collecting bodies are formed on the positive electrode plate and/or the negative electrode plate. Each heat conducting and collecting body is a portion of the positive current collector not coated by the positive active material layer or a portion of the negative current collector not coated by the negative active material layer. The at least two heat conducting and collecting bodies overlap and are stacked together to form at least one heat converging path, which is configured to transmit heat energy into or out of the battery cell. A thin-film heater is disposed on or connected to the heat converging path. The heat converging path and the thin-film heater cooperatively form a heat converging path heating assembly.

In the drawings, 1 represents the cylindrical outer casing, 2 represents the positive cover plate, 3 represents the positive terminal post, 4 represents the battery cell, 5 represents the heat conducting and collecting body, 6 represents the fluid-containing pipe, 7 represents the heat exchanging device.

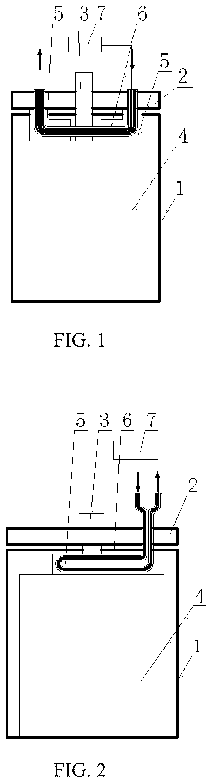

Referring to FIG. 1, the heat conducting and collecting body, the fluid-containing pipe, and the positive terminal post are disposed at the same end of the battery. An inlet and an outlet of the fluid-containing pipe are disposed on different ends of the positive cover plate. The inlet and the outlet of the fluid-containing pipe are further connected to a heat exchanging device outside the battery.

Referring to FIG. 2, the heat conducting and collecting body, the fluid-containing pipe, and positive terminal post are disposed at the same end of the battery. The inlet and an outlet of the fluid-containing pipe are disposed on one end of the positive cover plate. The inlet and the outlet of the fluid-containing pipe are further connected to a heat exchanging device outside the battery.

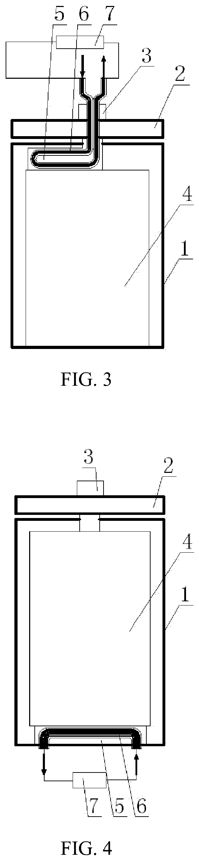

Referring to FIG. 3, the heat conducting and collecting body, the fluid-containing pipe, and the positive terminal post are disposed at one end of the battery. The inlet and the outlet of the fluid-containing pipe are both disposed at a center of the positive terminal post. The inlet and the outlet of the fluid-containing pipe are further connected to a heat exchanging device outside the battery.

Referring to FIG. 4, the heat conducting and collecting body, the fluid-containing pipe, and the negative terminal post are disposed at one end of the battery. The inlet and the outlet of the fluid-containing pipe are disposed at different ends of the negative cover plate. The inlet and the outlet of the fluid-containing pipe 6 are further connected to a heat exchanging device outside the battery.

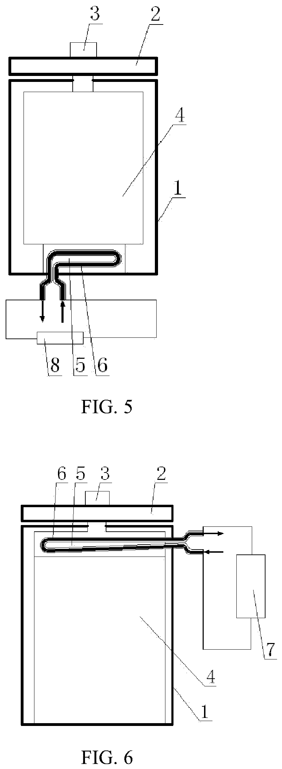

Referring to FIG. 5, the heat conducting and collecting body, the fluid-containing pipe, and the negative terminal post are disposed at one end of the battery. The inlet and the outlet of the fluid-containing pipe are both disposed on one end of the negative cover plate. The inlet and the outlet of the fluid-containing pipe are further connected to a heat exchanging device outside the battery.

Referring to FIG. 6, the heat conducting and collecting body, the fluid-containing pipe, and the positive terminal post are disposed at one end of the battery. The inlet and the outlet of the fluid-containing pipe are both disposed at one end of the sidewall of the outer casing. The inlet and the outlet of the fluid-containing pipe are further connected to a heat exchanging device outside the battery.

Implementations of the above disclosure will now be described by way of embodiments only. It should be noted that devices and structures not described in detail are understood to be implemented by the general equipment and methods available in the art.

It is to be understood, even though information and advantages of the present embodiments have been set forth in the foregoing description, together with details of the structures and functions of the present embodiments, the disclosure is illustrative only; changes may be made in detail, especially in matters of shape, size, and arrangement of parts within the principles of the present embodiments to the full extent indicated by the plain meaning of the terms in which the appended claims are expressed.

## Claims

1. A cylindrical lithium-ion battery comprising:
a battery cell, a cylindrical lithium-ion battery, which includes cylindrical outer casing, a positive cover plate, a negative cover plate, a positive terminal post, a negative terminal post, and a battery cell, the positive cover plate and the negative cover plate are disposed at opposite ends of the outer casing. The positive terminal post and the negative terminal post are respectively disposed on the positive cover plate and the negative cover plate, the battery cell comprising a positive electrode plate, a negative electrode plate, and a separator spaced between the positive electrode plate and the negative electrode plate, the positive electrode plate, the separator, and the negative electrode plate sequentially laminated together and then wound together to form the battery cell, the positive electrode plate comprising a positive electrode tab, the negative electrode plate comprising a negative electrode tab, the top cover comprising a positive terminal post electrically connected to the positive terminal tab and a negative terminal post electrically connected to the negative electrode tab, the negative electrode plate comprising a negative current collector and a negative active material layer coated on the negative current collector, the positive electrode plate comprising a positive current collector and a positive active material layer coated on the positive current collector, **characterized in that**:
heat conducting and collecting bodies are formed on the positive electrode plate and/or the negative electrode plate, each of the heat conducting and collecting bodies being a portion of the positive current collector which is not coated by the positive active material layer or a portion of the negative current collector which is not coated by the negative active material layer;
the at least two heat conducting and collecting bodies overlap and are stacked together to form at least one heat converging path, which being configured to transmit heat energy into or out of the battery cell, a thin-film heater is disposed on or connected to the heat converging path, the heat converging path and the thin-film heater cooperatively form a heat converging path heating assembly.

2. The cylindrical lithium-ion battery of claim 1 or claim 2, wherein the at least two heat conducting and collecting bodies spacedly overlap and are stacked together to form at least one heat converging path, which is configured to transmit heat energy into or out of the battery cell.

3. The cylindrical lithium-ion battery of claim 2, wherein the heat conducting and collecting bodies are connected to form the heat converging path by welding, the welding is ultrasonic welding, laser welding, or friction welding.

4. The cylindrical lithium-ion battery of claim 2, wherein the heat conducting and collecting bodies are connected to form the heat converging path by bolting, or riveting, or the heat conducting and collecting bodies are bent towards each other to form the heat converging path.

5. The cylindrical lithium-ion battery of any one of claims 1-4, wherein the heat conducting and collecting bodies are bent to be inclined with the positive electrode plate or the negative electrode plate by an angle between 0 degree to 90 degrees, the heat conducting and collecting bodies are bent toward a single direction or opposite directions.

6. The cylindrical lithium-ion battery of any one of claims 1-4, wherein a portion of each of the heat conducting and collecting bodies is bent, and the portion which is bent is connected to a remaining portion of the heat conducting and collecting bodies, the remaining portion of each of the heat conducting and collecting bodies is straight

7. The cylindrical lithium-ion battery of claim 6, wherein the portion is bent toward a single direction or opposite directions.

8. The cylindrical lithium-ion battery of any one of claims 1-4, wherein a portion of each of the heat conducting and collecting bodies is bent, and the portion which is bent is connected to a remaining portion of the heat conducting and collecting bodies, the remaining portion of each of the heat conducting and collecting bodies is straight.

9. The cylindrical lithium-ion battery of any one of claims 1-4, where at least a portion of each of the heat conducting and collecting bodies defines a plurality of holes or a concave and convex surface, the holes pass through the heat conducting and collecting body and have a 3D internal structure, or at least one of the heat conducting and collecting bodies, which define a plurality of holes or a concave and convex surface, are disposed among the other heat conducting and collecting bodies, the holes pass through the heat conducting and collecting body and have a mesh structure or a 3D internal structure, or at least one of the heat conducting and collecting bodies, which define a plurality of holes or a concave and convex surface, are disposed among the other heat conducting and collecting bodies, the holes pass through the heat conducting and collecting body and have a mesh structure or a 3D internal structure.

10. The cylindrical lithium-ion battery of any one of claims 1-4, wherein a plurality of fins is disposed among or on the heat conducting and collecting bodies, or a heat sink is disposed on the heat conducting and collecting bodies.

11. The cylindrical lithium-ion battery of any one of claims 1-4, wherein a heat exchanging device is connected to the heat converging path.

12. The cylindrical lithium-ion battery of claim 11, wherein the heat exchanging device is connected to the heat converging path by welding, bolting, gluing, or riveting.

13. The cylindrical lithium-ion battery of any one of claims 1-4, wherein each of the heat conducting and collecting bodies comprises an insulating layer, an insulating and heat conductive layer, or an insulating film on a surface thereof.

14. The cylindrical lithium-ion battery of any one of claims 1-4, wherein the heat converging path comprises an insulating layer or an insulating film on a surface thereof.

15. The cylindrical lithium-ion battery of any one of claims 1-4, wherein the at least one heat converging path is disposed at an end having a positive electrode tab, an end opposite to the positive electrode tab, or a side.

16. The cylindrical lithium-ion battery of any one of claims 1-4, wherein one, two, or three of the heat converging paths are disposed at the end having the positive electrode tab.

17. The cylindrical lithium-ion battery of any one of claims 1-4, wherein the two heat conducting and collecting bodies protrude from the positive electrode plate, portions of the heat conducting and collecting bodies which protrude from the positive electrode plate are inserted into an electrolyte in the outer casing.

18. The cylindrical lithium-ion battery of claims 17, wherein a heat exchanging device is disposed in the electrolyte for heating or cooling the electrolyte, or a temperature sensor is disposed on the heat exchanging device.

19. The cylindrical lithium-ion battery of any one of claims 1-2, wherein the heat conducting and collecting bodies are recessed with respect to the negative electrode plate, a thickness of an entirety of each of the heat conducting and collecting bodies is same as of a thickness of the interconnecting portion of the heat conducting and collecting bodies and the negative electrode plate.

20. The cylindrical lithium-ion battery of any one of claims 1-4, wherein a temperature sensor is disposed on the heat converging path, or the heat converging path is connected to the outer casing to cause the outer casing to serve as a heat sink.
